# EUROPÄISCHE PATENTSCHRIFT

(11) **EP 3 001 039 B1**
(45) Veröffentlichungstag und Bekanntmachung des Hinweises auf die Patenterteilung: **19.06.2019**
(21) Anmeldenummer: 15184854.6
(22) Anmeldetag: 11.09.2015
(51) Int. Cl.: F04D 19/04, F04D 29/059, F04D 29/063

(54) **VAKUUMPUMPE**
VACUUM PUMP
POMPE À VIDE

(43) Veröffentlichungstag der Anmeldung: 30.03.2016
(73) Patentinhaber: PFEIFFER VACUUM GMBH, 35614 Asslar (DE)
(72) Erfinder: Mekota, Mirko, 35630 Ehringshausen (DE)
(74) Vertreter: Manitz Finsterwald Patent- und Rechtsanwaltspartnerschaft mbB

(56) Entgegenhaltungen:
- EP-A1- 0 012 447
- EP-A2- 1 267 081
- EP-A2- 1 972 794
- WO-A1-2006/131694
- DE-A1-102008 024 764
- US-A- 5 461 636

## Beschreibung

Die vorliegende Erfindung betrifft eine Vakuumpumpe mit einem eine Rotorwelle umfassenden Rotor, zumindest einem Lager für die Rotorwelle, und einer Schmierstoffquelle zum Bereitstellen eines Schmierstoffes für das Lager, wobei die Rotorwelle einen Förderabschnitt umfasst, der dazu ausgebildet ist, von der Schmierstoffquelle stammenden Schmierstoff in einer zumindest eine axiale Komponente aufweisenden Förderrichtung zu dem Lager zu fördern.

Eine derartige Vakuumpumpe ist z.B. aus der EP 2 740 956 A2 bekannt. Bei dieser Vakuumpumpe wird der Förderabschnitt durch eine als separates Bauteil vorgesehene Mutter gebildet, die an ein Wellenende einer Rotorwelle geschraubt ist. Die Mutter weist eine kegelförmige Umfangsfläche auf, die dazu ausgebildet ist, von einer Schmierstoffquelle stammenden Schmierstoff zu einem Lager zu fördern. Die Mutter hat dabei gleichzeitig die Funktion, das Lager axial an einer Rotorwelle festzulegen. Eine solche Mutter wird auch als Spritzmutter bezeichnet.

Während dabei die Mutter zwar vorteilhaft mehrere Funktionen, nämlich Fördern des Schmierstoffes und Festlegen des Lagers, in sich vereint, hat sich gezeigt, dass durch das Aufschrauben der Mutter auf die Rotorwelle Späne oder Abriebpartikel entstehen können, die in das Lager gelangen und Funktion und Lebensdauer des Lagers beeinträchtigen können.

In der DE 10 2006 053 237 A1 wird dieses Problem dadurch angegangen, dass an einem einer solchen Mutter zugewandten Wellenende einer Rotorwelle ein Sammelraum zur Aufnahme von Spänen und Abriebpartikeln aus der Schraubverbindung der Mutter vorgesehen ist. Allerdings hat sich gezeigt, dass dadurch der negative Einfluss von Spänen oder Abriebpartikeln zwar verringert, jedoch möglicherweise nicht vollständig vermieden werden kann.

Eine Vakuumpumpe nach dem Oberbegriff des Anspruchs 1 ist aus der EP 1 267 081 A2 und aus der WO 2006/131694 A1 bekannt. Weiteren Stand der Technik bilden die US 5,461,636, die EP 0 012 447 A1 sowie die DE 10 2008 024 764 A1.

Es ist eine Aufgabe der Erfindung, bei einer Vakuumpumpe der eingangs genannten Art eine störungsfreie Lagerung der Rotorwelle zu gewährleisten.

Diese Aufgabe wird durch eine Vakuumpumpe mit den Merkmalen des Anspruchs 1 gelöst, und insbesondere dadurch, dass das Lager unabhängig von dem Förderabschnitt an der Rotorwelle fixiert ist.

Erfindungsgemäß muss das Lager also nicht länger durch ein zusätzliches, angeschraubtes Element, wie z.B. eine Spritzmutter, an der Rotorwelle, z.B. axial gegen eine Wellenschulter, festgelegt werden. Dadurch kann auf ein Gewinde in der Nähe des Lagers, welches eine Quelle für schädliche Späne oder Abriebpartikel darstellen kann, verzichtet werden.

Gleichzeitig ist eine einen Förderabschnitt bildende Mutter, wie sie im Stand der Technik beschrieben ist, ein aufwändig zu fertigendes Sonderteil. Wird das Lager erfindungsgemäß unabhängig von dem Förderabschnitt, insbesondere unabhängig von einer Spritzmutter, an der Rotorwelle fixiert, kann eine solche Mutter entfallen, wodurch die Vakuumpumpe insgesamt kostengünstiger herzustellen ist. Auch kann damit ein an der Rotorwelle ausgebildetes Gewinde entfallen, was ebenfalls zu Kosteneinsparungen bei der Herstellung der Vakuumpumpe führt.

Bei einer Ausführungsform ist das Lager kraftschlüssig an der Rotorwelle fixiert. Dadurch können zusätzliche Fixiermittel, beispielsweise für ein lediglich formschlüssiges Festlegen des Lagers, entfallen.

Das Lager ist insbesondere auf die Rotorwelle aufgepresst. Alternativ kann das Lager z.B. auch auf die Rotorwelle aufgeschrumpft sein. Während im Stand der Technik eine Übergangspassung zwischen dem Lager und einem Lagersitz der Welle vorgesehen ist, weil die axiale Festlegung des Lagers durch die Spritzmutter bewirkt wird, kann also bei der erfindungsgemäßen Vakuumpumpe eine Übermaßpassung zwischen dem Lager und einem Lagersitz der Rotorwelle vorgesehen sein, damit das Lager sich im montierten Zustand von selbst kraftschlüssig auf der Rotorwelle hält.

Bei einer weiteren Ausführungsform bildet der Förderabschnitt einen endseitigen Abschnitt der Rotorwelle. Der Förderabschnitt kann einstückig mit der Rotorwelle ausgebildet sein. Dadurch wird die Anzahl der Einzelteile der Vakuumpumpe reduziert. Außerdem können zusätzliche Befestigungsmittel zwischen Förderabschnitt und Rotorwelle entfallen. Beispielsweise ist der Förderabschnitt durch Drehen und/oder Schleifen an der Rotorwelle ausgebildet. Dies gewährleistet eine besonders einfache und kostengünstige Herstellung der Rotorwelle und damit der Vakuumpumpe.

Bei einer Ausführungsform weist der Förderabschnitt eine, bevorzugt zumindest teilweise kegelförmige oder konusförmige, Umfangsfläche auf, die sich in einer Richtung auf das Lager zu erweitert. Die Begriffe kegel- und konusförmig schließen die Form eines Kegelstumpfes oder allgemein eines Teilkegels mit ein. Alternativ kann der Förderabschnitt z.B. auch durch eine andere, sich in Richtung des Lagers erweiternde Form gebildet sein. Zum Beispiel kann der Förderabschnitt durch eine Umfangsfläche gebildet sein, die durch eine um die Rotationsachse der Rotorwelle rotierte Kurve definiert wird, wobei die Kurve zumindest eine Tangente mit einer radialen Komponenten größer Null aufweist. Die Kurve kann zumindest einen Teil einer Ellipse, Parabel oder Hyperbel umfassen. Insbesondere weist die Kurve in axialer Richtung zu dem Lager einen stetig steigenden Abstand zur Rotationsachse auf. Insbesondere in Verbindung mit einer Kante zur Abgabe des Schmierstoffes, z.B. nach einer der nachstehend näher beschriebenen Arten, lässt sich dadurch der Abgabewinkel von Schmierstofftröpfchen von dem Förderabschnitt beeinflussen und insbesondere auf das Lager ausrichten.

Die Rotorwelle weist zumindest eine Kante zur Abgabe des Schmierstoffes von dem Förderabschnitt an das Lager oder in Richtung des Lagers bei sich drehender Rotorwelle auf. Dadurch wird die Zufuhr von Schmierstoff in das Lager verbessert. Die Kante ist als Abschleuderkante zum Abschleudern von Schmierstofftröpfchen von dem Förderabschnitt ausgebildet.

Bei der erfindungsgemäßen Vakuumpumpe ist die Kante im Bereich einer in der Rotorwelle ausgebildeten Ausnehmung angeordnet. Die Kante begrenzt die Ausnehmung an einer, insbesondere axialen, Seite. Zusätzlich kann die Ausnehmung in Form eines Einstichs oder einer umlaufenden Nut oder Rille vorgesehen sein. Dadurch wird die Abgabe des Schmierstoffes weiter verbessert, während die Ausnehmung und die Kante in besonders einfacher Weise in die Welle eingebracht werden können. Bei einer weiteren Ausführungsform ist die Kante in axialer Richtung zwischen dem Förderabschnitt und dem Lager angeordnet.

In einer Weiterbildung grenzt der Förderabschnitt unmittelbar an einen Sitz der Rotorwelle für das Lager an. Die Fertigung der Rotorwelle wird damit weiter vereinfacht. Der Lagersitz kann jedoch in seiner Umfangsfläche einen von einem Kreiszylinder abweichenden Abschnitt umfassen, der ein Aufschieben oder Aufpressen des Lagers auf den Lagersitz vereinfacht.

Die Aufgabe der Erfindung wird ferner gelöst durch ein Verfahren zum Herstellen einer Rotorwelle eines Rotors für eine Vakuumpumpe gemäß Anspruch 9. Bei diesem Verfahren wird an einem endseitigen Abschnitt der Rotorwelle eine kegelförmige oder konusförmige, sich in einer Richtung von dem Ende der Rotorwelle weg erweiternde Umfangsfläche ausgebildet, so dass der endseitige Abschnitt der Rotorwelle einen mit der Rotorwelle einstückigen Förderabschnitt bildet, der während des Betriebs der Vakuumpumpe von einer Schmierstoffquelle der Vakuumpumpe stammenden Schmierstoff in einer zumindest eine axiale Komponente aufweisenden Förderrichtung zu einem Lager der Rotorwelle fördert.

Dabei wird außerdem angrenzend an das erweiterte Ende der Umfangsfläche in der Rotorwelle eine in Umfangsrichtung verlaufende Ausnehmung ausgebildet, die zur Umfangsfläche hin eine Kante zum Abschleudern des Schmierstoffs ausbildet.

Vorgestellt wird außerdem ein Verfahren zur Montage einer Vakuumpumpe, die einen Rotor mit einer Rotorwelle aufweist, welche erfindungsgemäß ausgebildet und/oder die erfindungsgemäß hergestellt worden ist, bei dem das Lager, dem während des Betriebs der Vakuumpumpe mittels des Förderabschnitts der Schmierstoff zugeführt wird, unabhängig von dem Förderabschnitt an der Rotorwelle fixiert wird, insbesondere durch Aufpressen auf einen sich an den Förderabschnitt anschließenden Sitz der Rotorwelle.

Die erfindungsgemäßen Verfahren lassen sich vorteilhaft entsprechend den im Rahmen dieser Anmeldung beschriebene Ausführungsformen von Verfahren und Vakuumpumpen weiterbilden und umgekehrt lässt sich die erfindungsgemäße Vakummpumpe entsprechend den hierin beschriebenen Ausführungsformen von Verfahren weiterbilden.

Weitere Ausführungsformen der Erfindung sind auch in den abhängigen Ansprüchen, der Beschreibung und den Figuren angegeben.

Die Erfindung wird nachfolgend lediglich beispielhaft unter Bezugnahme auf die schematische Zeichnung erläutert.
- Fig. 1: zeigt eine Vakuumpumpe des Standes der Technik.
- Fig. 2: zeigt eine Rotorwelle und ein Lager einer beispielhaften Vakuumpumpe.
- Fig. 3: zeigt eine Rotorwelle und ein Lager einer einer erfindungsgemäßen Vakuumpumpe.
- Fig. 4: zeigt eine Rotorwelle und ein Lager einer weiteren Ausführungsform einer erfindungsgemäßen Vakuumpumpe.

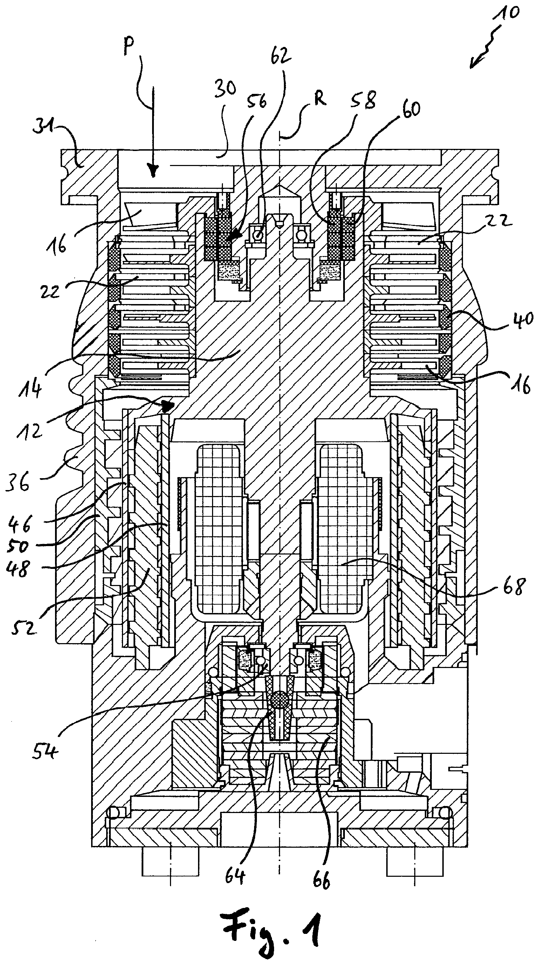

Die in Fig. 1 gezeigte, als Turbomolekularpumpe 10 ausgebildete Vakuumpumpe des Standes der Technik lässt sich erfindungsgemäß weiterbilden und einzelne Merkmale der Vakuumpumpe der Fig. 1 lassen sich zur Weiterbildung einer erfindungsgemäßen Vakuumpumpe oder eines erfindungsgemäßen Verfahrens heranziehen.

Die Turbomolekularpumpe 10 umfasst einen von einem Einlassflansch 31 umgebenen Einlass 30 sowie mehrere Pumpstufen zur Förderung des an dem Einlass 30 anstehenden Gases zu einem in Fig. 1 nicht dargestellten Auslass. Die Turbomolekularpumpe 10 umfasst einen Stator mit einem statischen Gehäuse 36 und einen in dem Gehäuse 36 angeordneten Rotor 12 mit einer um eine Rotationsachse R drehbar gelagerten Rotorwelle 14.

Die Turbomolekularpumpe 10 umfasst mehrere pumpwirksam miteinander in Serie geschaltete turbomolekulare Pumpstufen mit mehreren mit der Rotorwelle 14 verbundenen, als turbomolekulare Rotorscheiben 16 ausgebildeten Rotorabschnitten und mit mehreren in axialer Richtung zwischen den Rotorscheiben 16 angeordneten und in dem Gehäuse 36 festgelegten, als turbomolekulare Statorscheiben 22 ausgebildeten Statorabschnitten, die durch Distanzringe 40 in einem gewünschten axialen Abstand zueinander gehalten sind. Die Rotorscheiben 16 und Statorscheiben 22 stellen in einem Schöpfbereich eine in Pumprichtung P gerichtete axiale Pumpwirkung bereit.

Die Turbomolekularpumpe 10 umfasst zudem drei in radialer Richtung ineinander angeordnete und pumpwirksam miteinander in Serie geschaltete Holweck-Pumpstufen. Der rotorseitige Teil der Holweck-Pumpstufen umfasst zwei an der Rotorwelle 14 befestigte und von dieser getragene zylindermantelförmige Holweck-Rotorhülsen 46, 48, die koaxial zu der Rotationsachse R orientiert und ineinander geschachtelt sind. Ferner sind zwei zylindermantelförmige Holweck-Statorhülsen 50, 52 vorgesehen, die ebenfalls koaxial zu der Rotationsachse R orientiert und ineinander geschachtelt sind. Die pumpaktiven Oberflächen der Holweck-Pumpstufen sind jeweils durch die einander unter Ausbildung eines engen radialen Holweck-Spalts gegenüberliegenden radialen Mantelflächen, nämlich jeweils einer Holweck-Rotorhülse 46, 48 und einer Holweck-Statorhülse 50, 52, gebildet. Dabei ist jeweils eine der pumpaktiven Oberflächen glatt ausgebildet, im vorliegenden Fall beispielsweise die der Holweck-Rotorhülse 46 bzw. 48, wobei die gegenüberliegende pumpaktive Oberfläche der jeweiligen Holweck-Statorhülse 50 bzw. 52 eine Strukturierung mit schraubenlinienförmig um die Rotationsachse R herum in axialer Richtung verlaufenden Nuten aufweist, in denen durch die Rotation des Rotors 12 das Gas vorangetrieben und dadurch gepumpt wird.

Die drehbare Lagerung der Rotorwelle 14 wird durch ein Wälzlager 54 im Bereich des Auslasses und ein Permanentmagnetlager 56 im Bereich des Einlasses 30 bewirkt.

Das Permanentmagnetlager 56 umfasst eine rotorseitige Lagerhälfte 60 und eine statorseitige Lagerhälfte 58, die jeweils einen Ringstapel aus mehreren in axialer Richtung aufeinander gestapelten permanentmagnetischen Ringen umfassen, wobei die Magnetringe unter Ausbildung eines radialen Lagerspalts einander gegenüberliegen.

Innerhalb des Permanentmagnetlagers 56 ist ein Not- oder Fanglager 62 vorgesehen, das als ungeschmiertes Wälzlager ausgebildet ist und im normalen Betrieb der Vakuumpumpe ohne Berührung leer läuft und erst bei einer übermäßigen radialen Auslenkung des Rotors 12 gegenüber dem Stator 20 in Eingriff gelangt, um einen radialen Anschlag für den Rotor 12 zu bilden, der eine Kollision der rotorseitigen Strukturen mit den statorseitigen Strukturen verhindert.

Im Bereich des Wälzlagers 54 ist an der Rotorwelle 14 eine konische Spritzmutter 64 mit einem zu dem Wälzlager 54 hin zunehmenden Außendurchmesser vorgesehen, die mit einem Abstreifer eines mehrere mit einem Betriebsmittel, wie z.B. einem Schmierstoff, getränkte saugfähige Scheiben 66 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 64 übertragen und infolge der Zentrifugalkraft entlang der Spritzmutter 64 in Richtung des größer werdenden Außendurchmessers der Spritzmutter 64 zu dem Wälzlager 54 hin gefördert, wo es z.B. eine schmierende Funktion erfüllt.

Die Turbomolekularpumpe 10 umfasst einen Antriebsmotor 68 zum drehenden Antreiben des Rotors, dessen Läufer durch die Rotorwelle 14 gebildet ist. Eine nicht dargestellte Steuereinheit steuert den Antriebsmotor 68 an.

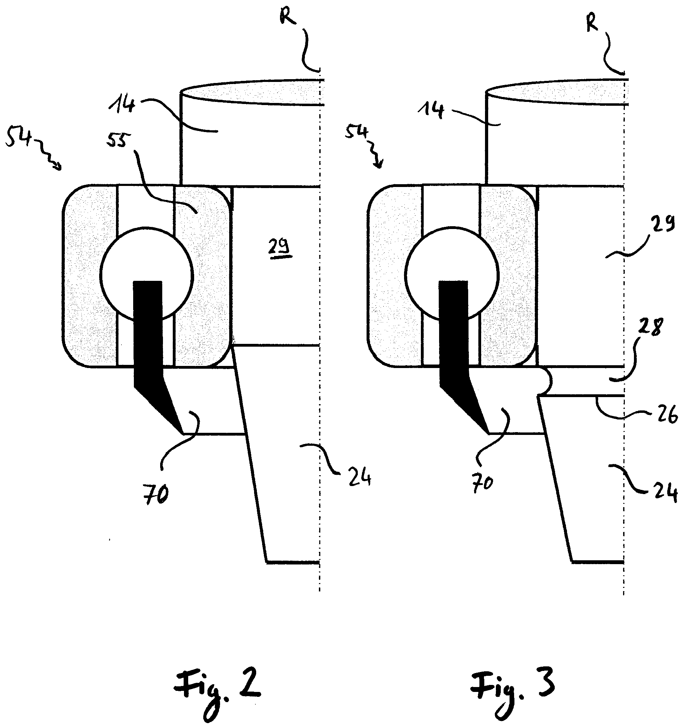

Fig. 2 zeigt einen Bereich einer Rotorwelle 14 einer beispielhaften Vakuumpumpe, die durch ein Wälzlager 54 gelagert ist. Die Rotorwelle 14 weist einen kegelförmigen Förderabschnitt 24 und einen kreiszylinderförmigen Lagersitz 29 auf. Der Förderabschnitt 24 ist einstückig mit der Welle 14 verbunden und durch das Herstellungsverfahren "Drehen" an einem auslassseitigen Ende der Rotorwelle 14 ausgebildet, d.h. durch Drehen hergestellt. Der Förderabschnitt 24 grenzt unmittelbar an den Lagersitz 29 an.

Das Wälzlager 54 sitzt mit einem Innenring 55 auf dem Lagersitz 29. Zwischen dem Lagersitz 29 und dem Innenring 55 ist eine Übermaßpassung vorgesehen. Zur Montage des Wälzlagers 54 an der Rotorwelle 14 wird das Wälzlager 54 in axialer Richtung, im Bild nach oben, auf den Lagersitz 29 der Rotorwelle 14 aufgepresst. Das Wälzlager 54 umfasst ferner einen Käfig 70, der sich in axialer Richtung aus dem Lagerkörper des Wälzlagers 54 heraus in Richtung des Förderabschnitts 24 erstreckt.

Im Betrieb der Vakuumpumpe wird dem Förderabschnitt 24 der Rotorwelle 14 der Fig. 2, zum Beispiel durch saugfähige Scheiben gemäß Fig. 1, Schmierstoff zugeführt. Dieser Schmierstoff benetzt die Umfangsfläche des Förderabschnitts 24 und wird infolge einer Drehung der Rotorwelle 14 aufgrund einer dadurch bewirkten Zentrifugalkraft axial nach oben gefördert. Damit gelangt Schmierstoff zu dem Wälzlager 54. Der Käfig 70 weist ebenfalls eine sich axial nach oben erweiternde, kegelige Innenfläche auf. Schmierstoff, der sich von dem Förderabschnitt 24 löst und dabei nach radial außen spritzt, wird durch diese Innenfläche des Käfigs 70 eingefangen. Da der Käfig 70, wenn auch mit einer geringeren Drehzahl als die Rotorwelle 14, ebenfalls rotiert, wird der Schmierstoff an der kegeligen Innenfläche des Käfigs 70 weiter zum Lager transportiert. Außerdem sammelt sich auch Schmierstoff am oberen axialen Ende des Förderabschnitts 24, der von dort aus den unteren Rand des Innenrings 55 des Wälzlagers 54 benetzt und in radialer Richtung zu dem Käfig 70 und damit ins Lagerinnere transportiert wird.

Dadurch wird mit einfachen Mitteln eine Umlaufschmierung des Wälzlagers 54 gewährleistet, ohne dass beispielsweise Abriebpartikel oder Späne in das Wälzlager 54 gelangen.

In Fig. 3 ist eine Ausführungsform einer Rotorwelle 14 einer erfindungsgemäßen Vakuumpumpe gezeigt, die wie die Rotorwelle 14 der Fig. 2 durch ein Wälzlager 54 mit einem Käfig 70 an einem Lagersitz 29 gelagert ist. Ein kegelförmiger Förderabschnitt 24 ist einstückig mit der Welle verbunden. Zwischen dem Förderabschnitt 24 und dem Lagersitz 29 ist eine als Einstich 28 ausgeführte umfängliche Ausnehmung vorgesehen. Durch den Einstich 28 ist an der dem Wälzlager 54 zugewandten axialen Seite des Förderabschnitts 24 eine umfängliche Kante 26 ausgebildet, die außerhalb des axialen Bereichs des Wälzlagers angeordnet ist.

Die Kante 26 verbessert die Abgabe von Schmierstoff von dem Förderabschnitt 24, indem sie ein Abschleudern des Schmierstoffs von dem Förderabschnitt 24 erleichtert. Die Kante 26 dient also als Abschleuderkante. Die Kante 26 lässt sich, zum Beispiel durch Variation der Abmessungen des Einstichs 28, gezielt so anordnen, dass der Schmierstoff in optimaler Weise zu dem Käfig 70 und in das Wälzlager 54 gebracht wird.

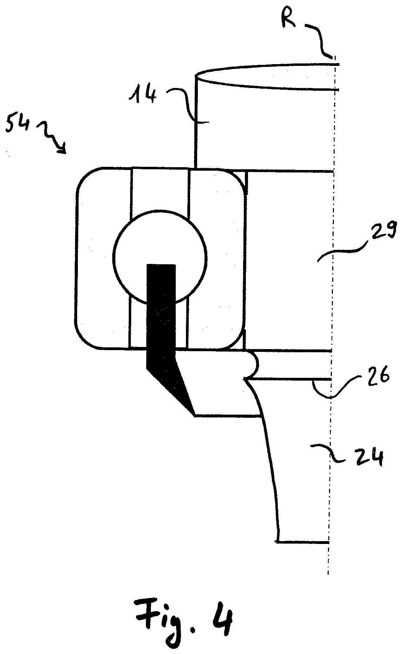

In Fig. 4 ist eine weitere Ausführungsform einer erfindungsgemäßen Rotorwelle 14 gezeigt, die ebenfalls eine umfängliche Kante 26 zur verbesserten Abgabe von Schmierstoff von einem Förderabschnitt 24 aufweist. Der Förderabschnitt 24 ist nicht kegelförmig ausgebildet, erweitert sich jedoch in axialer Richtung hin zu einem Wälzlager 54, also im Bild nach oben. Die Umfangsfläche bzw. Mantelfläche des Förderabschnitts 24 ist durch eine um die Rotationsachse R rotierte Kurve definiert, die in axialer Richtung hin zu dem Wälzlager 54 einen größer werdenden Abstand zur Rotationsachse R aufweist. Dadurch lässt sich der Förderabschnitt 24 im Bereich der Kante 26 steiler ausführen, wodurch die Abgabe von Schmierstoff von dem Förderabschnitt 24 verbessert wird, während dennoch eine ausreichende bauliche Länge des Förderabschnitts sichergestellt wird. Ferner lässt sich so die Richtung eines Abschleuderns von Schmierstoff beeinflussen und insbesondere genauer einstellen. Eine gekrümmte Mantelfläche, wie der Förderabschnitt 24 in Fig. 4 aufweist, könnte auch als Mantelfläche bei einer aufzuschraubenden Spritzspitze entsprechend der EP 2 740 956 A2 verwendet werden.

### Bezugszeichenliste

- 10: Turbomolekularpumpe
- 12: Rotor
- 14: Rotorwelle
- 16: Rotorscheibe
- 22: Statorscheibe
- 24: Förderabschnitt
- 26: Abschleuderkante
- 28: Einstich
- 29: Lagersitz
- 30: Einlass
- 31: Einlassflansch
- 36: Gehäuse
- 40: Distanzring
- 46: Holweck-Rotorhülse
- 48: Holweck-Rotorhülse
- 50: Holweck-Statorhülse
- 52: Holweck-Statorhülse
- 54: Wälzlager
- 55: Wälzlagerinnenring
- 56: Permanentmagnetlager
- 58: statorseitige Permanentmagnetlagerhälfte
- 60: rotorseitige Permanentmagnetlagerhälfte
- 62: Fanglager
- 64: Spritzmutter
- 66: saugfähige Scheibe
- 68: Antriebsmotor
- 70: Käfig

- P: Pumprichtung
- R: Rotationsachse

## Patentansprüche

1. Vakuumpumpe (10) mit
einem eine Rotorwelle (14) umfassenden Rotor (12),
zumindest einem Lager (54) für die Rotorwelle (14), und
einer Schmierstoffquelle zum Bereitstellen eines Schmierstoffes für das Lager (54),
wobei die Rotorwelle (14) einen Förderabschnitt (24) umfasst, der dazu ausgebildet ist, von der Schmierstoffquelle stammenden Schmierstoff in einer zumindest eine axiale Komponente aufweisenden Förderrichtung zu dem Lager (54) zu fördern, und
wobei das Lager (54) unabhängig von dem Förderabschnitt (24) an der Rotorwelle (14) fixiert ist,
**dadurch gekennzeichnet, dass**
die Rotorwelle (14) zumindest eine Kante (26) zur Abgabe des Schmierstoffes von dem Förderabschnitt (24) an das Lager (54) oder in Richtung des Lagers (54) bei sich drehender Rotorwelle (14) aufweist,
wobei die Kante (26) als Abschleuderkante zum Abschleudern von Schmierstofftröpfchen von dem Förderabschnitt (24) ausgebildet ist, und wobei die Kante (26) im Bereich einer in der Rotorwelle (14) ausgebildeten Ausnehmung (28) angeordnet ist und die Ausnehmung (28) einseitig begrenzt.

2. Vakuumpumpe (10) nach Anspruch 1,
**dadurch gekennzeichnet, dass**
das Lager (54) kraftschlüssig an der Rotorwelle (14) fixiert ist.

3. Vakuumpumpe (10) nach Anspruch 1 oder 2,
**dadurch gekennzeichnet, dass**
das Lager (54) auf die Rotorwelle (14) aufgepresst ist.

4. Vakuumpumpe (10) nach zumindest einem der vorstehenden Ansprüche,
**dadurch gekennzeichnet, dass**
der Förderabschnitt (24) einen endseitigen Abschnitt der Rotorwelle (14) bildet.

5. Vakuumpumpe (10) nach zumindest einem der vorstehenden Ansprüche,
**dadurch gekennzeichnet, dass**
der Förderabschnitt (24) einstückig mit der Rotorwelle (14) ausgebildet ist.

6. Vakuumpumpe (10) nach zumindest einem der vorstehenden Ansprüche,
**dadurch gekennzeichnet, dass**
der Förderabschnitt (24) eine Umfangsfläche aufweist, die sich in einer Richtung auf das Lager (54) zu erweitert.

7. Vakuumpumpe (10) nach zumindest einem der vorstehenden Ansprüche,
**dadurch gekennzeichnet, dass**
die Ausnehmung (28) in Form einer umlaufenden Nut oder Rille vorgesehen ist.

8. Vakuumpumpe (10) nach zumindest einem der vorstehenden Ansprüche,
**dadurch gekennzeichnet, dass**
die Kante (26) in axialer Richtung zwischen dem Förderabschnitt (24) und dem Lager (54) angeordnet ist.

9. Verfahren zum Herstellen einer Rotorwelle (14) eines Rotors (12) für eine Vakuumpumpe (10), bei dem an einem endseitigen Abschnitt der Rotorwelle (14) sich in einer Richtung von dem Ende der Rotorwelle (14) weg erweiternde Umfangsfläche ausgebildet wird, so dass der endseitige Abschnitt der Rotorwelle (14) einen mit der Rotorwelle (14) einstückigen Förderabschnitt (24) bildet, der während des Betriebs der Vakuumpumpe (10) von einer Schmierstoffquelle der Vakuumpumpe stammenden Schmierstoff in einer zumindest eine axiale Komponente aufweisenden Förderrichtung zu einem Lager (54) der Rotorwelle (14) fördert,
**dadurch gekennzeichnet, dass**
angrenzend an das erweiterte Ende der Umfangsfläche in der Rotorwelle (14) eine in Umfangsrichtung verlaufende Ausnehmung (28) ausgebildet wird, die zur Umfangsfläche hin eine Kante (26) zum Abschleudern des Schmierstoffs ausbildet.

## Claims

1. A vacuum pump (10) comprising
a rotor (12) comprising a rotor shaft (14);
at least one bearing (54) for the rotor shaft (14); and
a lubricant source for providing a lubricant for the bearing (54),
wherein the rotor shaft (14) comprises a conveying section (24) which is configured to convey lubricant originating from the lubricant source to the bearing (54) in a conveying direction having at least one axial component, and
wherein the bearing (54) is fixed to the rotor shaft (14) independently of the conveying section (24),
**characterized in that**
the rotor shaft (14) has at least one edge (26) for dispensing the lubricant from the conveying section (24) to the bearing (54) or in the direction of the bearing (54) when the rotor shaft (14) rotates,
with the edge (26) being configured as an expulsion edge for expelling lubricant drops from the conveying section (24), and
with the edge (26) being arranged in a region of a recess (28) formed in the rotor shaft (14) and bounding the recess (28) at one side.

2. A vacuum pump (1) in accordance with claim 1,
**characterized in that**
the bearing (54) is fixed to the rotor shaft (14) in a force-transmitting manner.

3. A vacuum pump (10) in accordance with claim 1 or claim 2,
**characterized in that**
the bearing (54) is pressed onto the rotor shaft (14).

4. A vacuum pump (10) in accordance with at least one of the preceding claims,
**characterized in that**
the conveying section (24) forms an end-side section of the rotor shaft (14).

5. A vacuum pump (10) in accordance with at least one of the preceding claims,
**characterized in that**
the conveying section (24) is formed in one piece with the rotor shaft (14).

6. A vacuum pump (10) in accordance with at least one of the preceding claims,
**characterized in that**
the conveying section (24) has a peripheral surface which expands in a direction toward the bearing (54).

7. A vacuum pump (10) in accordance with at least one of the preceding claims,
**characterized in that**
the recess (28) is provided in the form of a peripheral groove or channel.

8. A vacuum pump (10) in accordance with at least one of the preceding claims,
**characterized in that**
the edge (26) is arranged between the conveying section (24) and the bearing (54) in an axial direction.

9. A method of manufacturing a rotor shaft (14) of a rotor (12) for a vacuum pump (10), in which a peripheral surface expanding in a direction away from the end of the rotor shaft (14) is formed at an end-side section of the rotor shaft (14) such that the end-side section of the rotor shaft (14) forms a conveying section (24) which is in one piece with the rotor shaft (14) and which, during the operation of the vacuum pump (10), conveys lubricant originating from a lubricant source of the vacuum pump to a bearing (54) of the rotor shaft (14) in a conveying direction having at least one axial component,
**characterized in that**
a recess (28) extending in the peripheral direction is formed adjacent to the expanded end of the peripheral surface in the rotor shaft (14) and forms an edge (26) toward the peripheral surface for expelling the lubricant.

## Revendications

1. Pompe à vide (10) comportant
un rotor (12) pourvu d'un arbre de rotor (14),
au moins un palier (54) pour l'arbre de rotor (14), et
une source de lubrifiant pour mettre un lubrifiant à disposition du palier (54), dans laquelle
l'arbre de rotor (14) comprend une portion de convoyage (24) réalisée pour convoyer le lubrifiant provenant de la source de lubrifiant jusqu'au palier (54) dans une direction de convoyage comprenant au moins une composante axiale, et
le palier (54) est fixé à l'arbre de rotor (14) indépendamment de la portion de convoyage (24),
**caractérisée en ce que**
l'arbre de rotor (14) comprend au moins une arête (26) pour distribuer le lubrifiant depuis la portion de convoyage (24) vers le palier (54) ou en direction du palier (54), l'arbre de rotor (14) étant en rotation,
l'arête (26) est réalisée sous forme d'arête d'éjection pour éjecter par centrifugation des gouttes de lubrifiant depuis la portion de convoyage (24), et l'arête (26) est agencée au niveau d'un évidement (28) ménagé dans l'arbre de rotor (14) et délimite unilatéralement l'évidement (28).

2. Pompe à vide (10) selon la revendication 1,
**caractérisée en ce que**
le palier (54) est fixé par coopération de force à l'arbre de rotor (14).

3. Pompe à vide (10) selon la revendication 1 ou 2,
**caractérisée en ce que**
le palier (54) est pressé sur l'arbre de rotor (14).

4. Pompe à vide (10) selon l'une au moins des revendications précédentes,
**caractérisée en ce que**
la portion de convoyage (24) constitue une portion côté extrémité de l'arbre de rotor (14).

5. Pompe à vide (10) selon l'une au moins des revendications précédentes,
**caractérisée en ce que**
la portion de convoyage (24) est réalisée d'un seul tenant avec l'arbre de rotor (14).

6. Pompe à vide (10) selon l'une au moins des revendications précédentes,
**caractérisée en ce que**
la portion de convoyage (24) présente une surface périphérique qui va en s'évasant dans une direction vers le palier (54).

7. Pompe à vide (10) selon l'une au moins des revendications précédentes,
**caractérisée en ce que**
l'évidement (28) est prévu sous la forme d'une gorge ou rainure périphérique.

8. Pompe à vide (10) selon l'une au moins des revendications précédentes,
**caractérisée en ce que**
l'arête (26) est agencée en direction axiale entre la portion de convoyage (24) et le palier (54).

9. Procédé de réalisation d'un arbre de rotor (14) d'un rotor (12) pour une pompe à vide (10), dans lequel une surface périphérique est réalisée au niveau d'une portion côté extrémité de l'arbre de rotor (14), qui va en s'évasant dans une direction partant de l'extrémité de l'arbre de rotor (14) , de telle sorte que la portion côté extrémité de l'arbre de rotor (14) constitue une portion de convoyage (24) réalisée d'un seul tenant avec l'arbre de rotor (14), qui convoie un lubrifiant provenant d'une source de lubrifiant de la pompe à vide jusqu'à un palier (54) de l'arbre de rotor (14) dans une direction de convoyage présentant au moins une composante axiale, pendant le fonctionnement de la pompe à vide (10),
**caractérisé en ce que**
au voisinage de l'extrémité évasée de la surface périphérique, un évidement (28) est ménagé dans l'arbre de rotor (14), qui s'étend en direction périphérique et qui constitue vers la surface périphérique une arête (26) pour éjecter par centrifugation le lubrifiant.
